# DEMANDE DE BREVET EUROPEEN

(11) **EP 4 782 339 A1**
(43) Date de publication de la demande: **29.07.2026**
(21) Numéro de dépôt: 26153989.4
(22) Date de dépôt: 26.01.2026
(51) Int. Cl.: B64D 27/40

(54) **SYSTÈME DE PROPULSION POUR AÉRONEF COMPORTANT UNE TURBOMACHINE, UN MÂT D' ACCROCHAGE ET DES MOYENS DE FIXATION DU TURBOMACHINE AU MÂT D' ACCROCHAGE**

(30) Priorité: 28.01.2025 FR 2500887
(71) Demandeur: AIRBUS OPERATIONS (S.A.S.), 31060 Toulouse (FR)
(72) Inventeur: PAUTIS, Olivier, 31060 TOULOUSE (FR); SILLIERES, Lionel, 31060 TOULOUSE (FR); VANDERBAUWEDE, Simon, 31060 TOULOUSE (FR); CHARTON, Nicolas, 31060 TOULOUSE (FR); VINOT, Julien, 31060 TOULOUSE (FR)
(74) Mandataire: Cabinet Le Guen Maillet

(57) **Abrégé**

L'invention concerne un système de propulsion (100) pour aéronef comportant une turbomachine (102) comportant un carter avant (103) avec une face arrière (103a) et un carter arrière (105), un mât d'accrochage (104) avec une partie frontale (106a) et auquel est fixée une ferrure arrière (108), une arche (152) fixée à la ferrure arrière (108) et au carter arrière (105), et de part et d'autre du plan médian vertical (P), deux bielles bâbord (155a-b) et deux bielles tribord (157a) fixées entre la face arrière (103a) du carter avant (103) et l'arche (152), où les deux bielles bâbord, respectivement tribord convergent l'une vers l'autre dans une zone de convergence tribord au niveau de l'arche (152), et une bielle centrale (156) inscrite dans le plan médian vertical (P) et fixée entre la face arrière (103a) et à l'arche (152).

## Description

### DOMAINE TECHNIQUE

La présente invention concerne le domaine général de fixation d'une turbomachine sous l'aile d'un avion. Il s'agit notamment d'un système de propulsion comprenant une turbomachine, comme un turboréacteur à double flux ou un turbopropulseur à soufflante non carénée, un mât d'accrochage et des moyens de fixation de la turbomachine sous le mât d'accrochage. Elle s'applique également à un aéronef équipé d'un tel système de propulsion.

### ÉTAT DE LA TECHNIQUE ANTÉRIEURE

Un système de propulsion de l'état de la technique est fixé sous l'aile d'un aéronef. Il comporte une turbomachine et un mât d'accrochage par lequel la turbomachine est fixée sous l'aile. Le mât d'accrochage possède une structure rigide, également appelée structure primaire, avec des moyens de fixation pour fixer la turbomachine.

Ces moyens de fixation sont constitués entre autres d'une fixation avant de la turbomachine, d'une fixation arrière de la turbomachine et d'un dispositif pour reprendre les efforts de poussée générés par la turbomachine.

Le mât d'accrochage comporte également d'autres éléments de fixation qui assurent la fixation du mât d'accrochage à l'aile.

Les documents US-A-2013/240666, EP-A-4 438 486, EP-B-3 344 544 et FR-A-2 925 016 divulguent des systèmes de propulsion de l'état de la technique.

Bien qu'une telle structure soit satisfaisante, il est souhaitable de trouver un arrangement alternatif qui permet, entre autres, d'avoir une liaison isostatique entre la turbomachine et le mât d'accrochage, tout en choisissant les chemins d'efforts les plus adaptés.

### EXPOSE DE L'INVENTION

Un objet de la présente invention est de proposer un système de propulsion comprenant une turbomachine, un mât d'accrochage et des moyens de fixation de la turbomachine sous le mât d'accrochage.

À cet effet, est proposé un système de propulsion pour un aéronef, ledit système de propulsion comportant :
- une turbomachine s'étendant autour d'un axe longitudinal et présentant un plan médian vertical contenant l'axe longitudinal et comportant un carter avant avec une face arrière perpendiculaire à l'axe longitudinal et un carter arrière,
- un mât d'accrochage présentant une structure rigide avec une partie frontale et un longeron inférieur auquel est fixée une ferrure arrière,
- une attache moteur avant qui est fixée entre une partie supérieure du carter avant et la partie frontale de la structure rigide,
- une arche avec une base fixée de manière articulée à la ferrure arrière et deux bras disposés de part et d'autre du plan médian vertical, chaque bras présentant une première extrémité solidaire de la base et une deuxième extrémité fixée de manière articulée au carter arrière,
- d'un côté bâbord du plan médian vertical, deux bielles bâbord, où chaque bielle bâbord est fixée à la face arrière du carter avant par un premier point de liaison bâbord et à l'arche par un deuxième point de liaison bâbord, où les deux bielles bâbord convergent l'une vers l'autre dans une zone de convergence bâbord au niveau de l'arche,
- d'un côté tribord du plan médian vertical, deux bielles tribord, où chaque bielle tribord est fixée à la face arrière du carter avant par un premier point de liaison tribord et à l'arche par un deuxième point de liaison tribord, où les deux bielles tribord convergent l'une vers l'autre dans une zone de convergence tribord au niveau de l'arche, et
- une bielle centrale qui est inscrite dans le plan médian vertical et qui est fixée à la face arrière du carter avant par un premier point de liaison centrale et à l'arche par un deuxième point de liaison centrale.

Un tel arrangement permet, entre autres, d'avoir une liaison isostatique entre la turbomachine équipée des éléments de fixation et le mât d'accrochage.

Avantageusement, la ferrure arrière et l'arche sont inscrites dans un même plan d'intégration perpendiculaire à l'axe longitudinal.

Avantageusement, chaque zone de convergence se situe, parallèlement à l'axe longitudinal, à une distance maximale égale à trois fois l'épaisseur de l'arche soit en avant du plan d'intégration, soit en arrière du plan d'intégration.

Avantageusement, la zone de convergence bâbord et la zone de convergence tribord sont symétriques par rapport au plan médian vertical et la bielle centrale converge vers une droite de convergence moyenne reliant la zone de convergence bâbord et la zone de convergence tribord.

Avantageusement, la zone de convergence bâbord est entre 10 heures et 11 heures et la zone de convergence tribord est entre 1 heure et 2 heures.

Avantageusement, pour chaque groupe de deux bielles, il y a une bielle inférieure dont le premier point de liaison est entre 7 heures et 9 heures, respectivement entre 3 heures et 5 heures, et pour chaque groupe de deux bielles, il y a une bielle supérieure dont le premier point de liaison est entre 10 heures et 11 heures, respectivement entre 1 heure et 2 heures. Avantageusement, le deuxième point de liaison d'au moins une bielle de chaque groupe de deux bielles prend la forme d'une liaison encastrement avec l'arche.

Avantageusement, les deux bielles dont les deuxièmes points de liaison sont encastrés, sont en outre fixées rigidement l'une avec l'autre.

Avantageusement, la fixation entre la base et la ferrure arrière est assurée, d'une part, par deux bielles arrière disposées symétriquement de part et d'autre du plan médian vertical, où chaque bielle arrière est fixée de manière articulée par un premier point de liaison à la ferrure arrière et par un deuxième point de liaison à la base, et, d'autre part, au niveau du plan médian vertical, par un troisième point de liaison entre la base et la ferrure arrière.

Avantageusement, les bielles arrière sont inscrites dans le plan d'intégration.

Avantageusement, la fixation entre la deuxième extrémité de chaque bras et le carter arrière est assurée par deux paires de biellettes disposées symétriquement par paire, de part et d'autre du plan médian vertical, et où chaque biellette est inscrite dans un plan perpendiculaire à l'axe longitudinal, et où chaque biellette est fixée de manière articulée à la deuxième extrémité du bras qui est du même côté par un premier point de liaison et au carter arrière par un deuxième point de liaison.

Avantageusement, les biellettes sont inscrites dans le plan d'intégration.

Avantageusement, pour chaque paire de biellettes, les deux biellettes sont disposées symétriquement de part et d'autre d'un plan horizontal passant par l'axe longitudinal.

Avantageusement, l'attache moteur avant comporte une ferrure avant fixée à la partie frontale, deux bielles avant disposées symétriquement de part et d'autre du plan médian vertical et un pion vertical solidaire de la ferrure avant ou du carter avant et logé dans un alésage respectivement du carter avant ou de la ferrure avant, où chaque bielle avant est fixée de manière articulée par un premier point de liaison à la ferrure avant et par un deuxième point de liaison au carter avant.

L'invention concerne un aéronef comportant un système de propulsion selon l'une des variantes précédentes.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 est une vue de côté d'un aéronef selon l'invention,
Fig. 2 est une représentation schématique en perspective d'un système de propulsion selon l'invention,
Fig. 3 est une vue en coupe selon le plan de coupe III de la Fig. 2, et
Fig. 4 est une vue en coupe selon le plan de coupe IV de la Fig. 2.

### EXPOSÉ DÉTAILLÉ DE MODES DE RÉALISATION

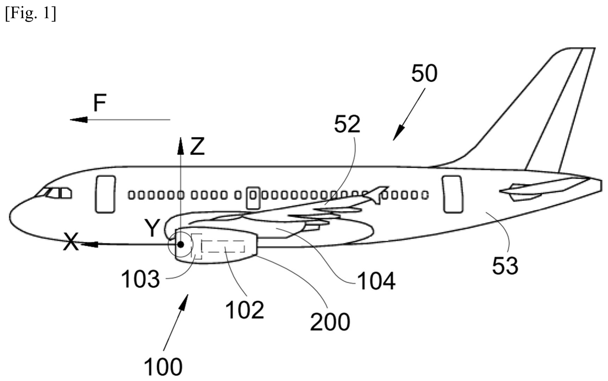

La Fig. 1 montre un aéronef 50 qui présente un fuselage 53 de chaque côté duquel une aile 52 est fixée. Sous chaque aile 52 est fixé un système de propulsion 100 selon l'invention et qui comprend un mât d'accrochage 104 et une turbomachine 102 qui est logée ici dans une nacelle 200. L'invention s'applique à tous type de turbomachine 102 comme par exemple un turboréacteur à double flux ou un turbopropulseur à soufflante non carénée.

Le système de propulsion 100 est fixé à l'aile 52 par le mât d'accrochage 104 et la turbomachine 102 est fixée sous le mât d'accrochage 104.

Par convention, on appelle X l'axe longitudinal de la turbomachine 102, cet axe X étant parallèle à une direction longitudinale de cette turbomachine 102 et à une direction longitudinale de l'aéronef 50. D'autre part, Y est l'axe transversal de la turbomachine 102 qui est horizontal lorsque l'aéronef 50 est au sol et Z est l'axe vertical ou la hauteur verticale lorsque l'aéronef 50 est au sol, ces trois axes X, Y et Z étant orthogonaux entre eux.

En outre, les termes "avant" et "arrière" doivent être considérés en relation avec une direction d'avancement de l'aéronef 50 pendant le fonctionnement de la turbomachine 102, cette direction étant schématiquement représentée par la flèche F.

La turbomachine 102 et le mât d'accrochage 104 sont globalement symétriques par rapport à un plan médian vertical P (XZ) qui contient l'axe longitudinal X et donc la direction verticale Z. L'axe transversal Y est perpendiculaire au plan médian vertical P.

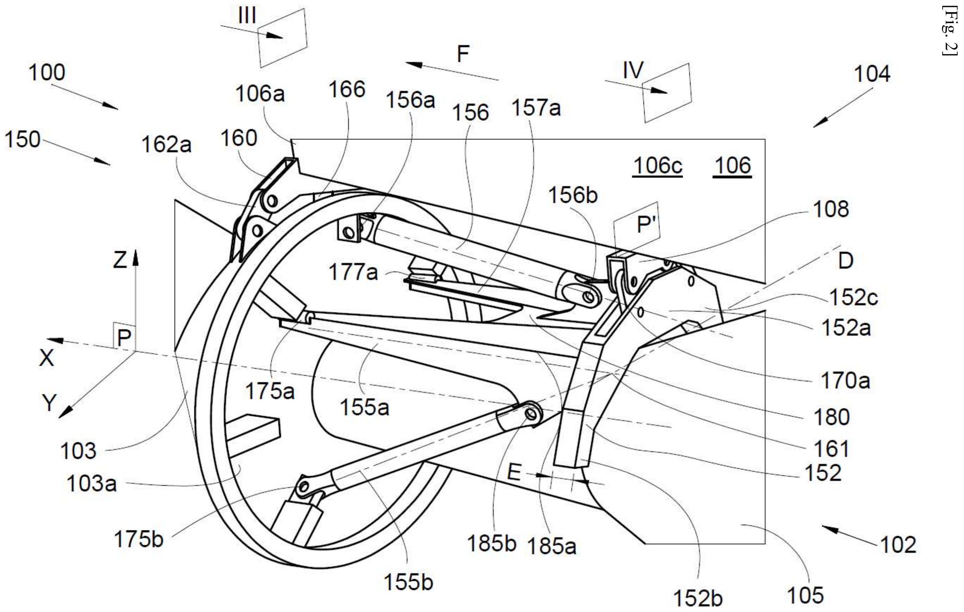

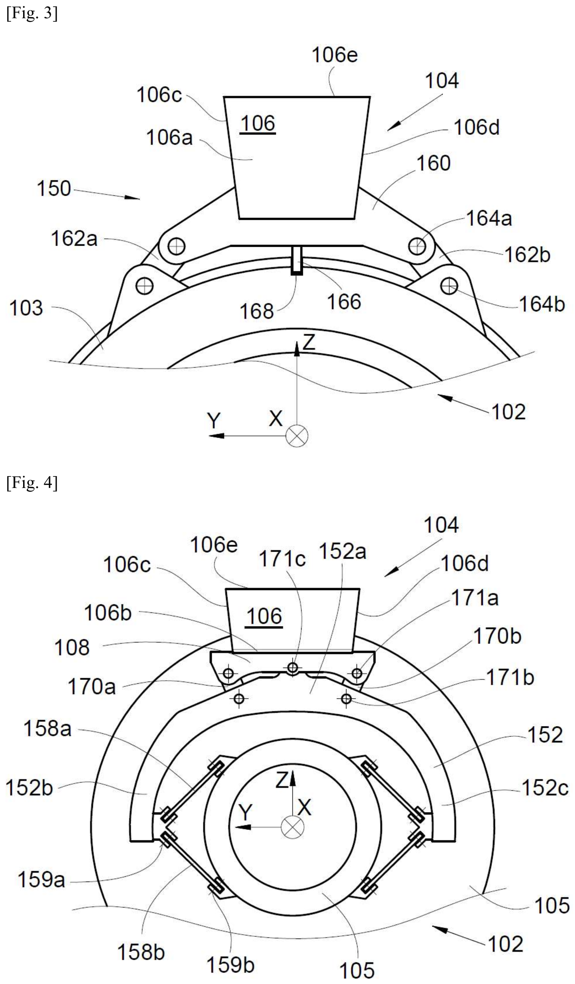

La Fig. 2 montre le système de propulsion 100 selon l'invention et les Figs. 3 et 4 montrent des détails de réalisation du système de propulsion 100.

Le système de propulsion 100 comprend la turbomachine 102 et le mât d'accrochage 104 par lequel la turbomachine 102 est fixée à l'aile 52. Le mât d'accrochage 104 est représenté ici par sa structure rigide 106, également appelée structure primaire, et qui est fixée à la structure de l'aile 52 par tous moyens de solidarisation appropriés et connus de l'homme du métier.

La structure rigide 106 se présente sous la forme d'un caisson qui comporte une partie frontale 106a, située à l'avant de la structure rigide 106, un longeron inférieur 106b s'étendant en dessous de la structure rigide 106 et un longeron supérieur 106e s'étendant au-dessus de la structure rigide 106. La structure rigide 106 comporte également deux parois latérales 106c-d de chaque côté du plan médian vertical P. Ces différents longerons et parois sont fixés les uns aux autres pour former la structure rigide 106. La partie frontale 106e comporte par exemple une paroi frontale et une partie du longeron inférieur 106b et des parois latérales 106c-d.

La turbomachine 102 comprend de l'avant vers l'arrière, un carter avant 103 et un carter arrière 105 qui est fixé à l'arrière du carter avant 103 et dans lequel des éléments de la turbomachine 102 sont logés comme des étages de compression, une chambre de combustion, des étages de turbine et un cône d'éjection. Le carter avant 103 est par exemple un carter de soufflante dans lequel est montée une soufflante d'un turboréacteur, il peut également s'agir du carter qui est juste à l'arrière de la soufflante dans le cas d'un turbopropulseur à soufflante non carénée.

Le carter avant 103 présente un diamètre supérieur au diamètre du carter arrière 105.

Le carter avant 103 présente à l'arrière une face arrière 103a qui est perpendiculaire à l'axe longitudinal X et s'étend ainsi dans un plan parallèle au plan YZ. Le carter avant 103 et le carter arrière 105 forment des surfaces de révolution autour de l'axe longitudinal X.

Le système de propulsion 100 comprend une attache moteur avant 150 qui assure la fixation entre une partie supérieure du carter avant 103 et la partie frontale 106a de la structure rigide 106.

Le système de propulsion 100 comprend également une arche 152 qui est disposée autour du carter arrière 105 et à l'arrière de la surface arrière 103a du carter avant 103.

Une ferrure arrière 108 est fixée de manière rigide au longeron inférieur 106b sous la structure rigide 106.

L'arche 152 comporte une base 152a qui est fixée de manière articulée à la ferrure arrière 108. L'arche 152 comporte également deux bras 152b-c disposés de part et d'autre du plan médian vertical P, c'est-à-dire que symétriquement par rapport au plan médian vertical P, il y a un bras 152b à bâbord et un bras 152c à tribord. Chaque bras 152b-c présente une première extrémité qui est solidaire de la base 152a et une deuxième extrémité qui est fixée de manière articulée au carter arrière 105. Chaque bras 152b-c peut être un élément fixé à la base 152a ou former un ensemble monobloc avec la base 152a. L'arche 152 présente parallèlement à l'axe longitudinal X, une épaisseur E qui est dimensionnée de manière à supporter les efforts qui y transitent comme dans les fixations arrière de l'état de la technique. L'épaisseur E est répartie de part et d'autre d'un plan d'intégration P'.

Dans le mode de réalisation de l'invention représenté sur la Fig. 2, les deuxièmes extrémités de chaque bras 152b-c de l'arche 152 sont respectivement à 3 heures et 9 heures. Mais les positions des deuxièmes extrémités de chaque bras 152b-c de l'arche 152 peuvent être disposées à +/- 45° par rapport à ces positions représentées.

Le système de propulsion 100 comprend également du côté bâbord du plan médian vertical P, deux bielles bâbord 155a-b et du côté tribord du plan médian vertical P, deux bielles tribord 157a dont seulement une est visible sur la Fig. 2. Les bielles bâbord 155a-b et les bielles tribord 157a sont globalement symétriques par rapport au plan médian vertical P.

Chaque bielle bâbord 155a-b est fixée par l'une de ses extrémités à la face arrière 103a du carter avant 103 par un premier point de liaison bâbord 175a-b et par l'autre de ses extrémités à l'arche 152 par un deuxième point de liaison bâbord 185a-b.

Les deux bielles bâbord 155a-b convergent l'une vers l'autre dans une zone de convergence bâbord 161 qui est au niveau de l'arche 152, c'est-à-dire que les deux deuxièmes points de liaison bâbord 185a-b sont concentrés au même endroit. Dans le mode de réalisation de l'invention représenté ici, la zone de convergence bâbord 161 est ici un point d'intersection, mais elle peut être plus étendue.

En d'autres termes, selon l'invention, les deux bielles bâbord 155a-b convergent l'une vers l'autre dans la zone de convergence bâbord 161 qui est au niveau de l'arche 152 lorsque, parallèlement à l'axe longitudinal X, la zone de convergence bâbord 161 se situe à une distance maximale égale à trois fois l'épaisseur de l'arche 152 soit en avant du plan d'intégration P', soit en arrière du plan d'intégration P'.

Chaque bielle tribord 157a est fixée par l'une de ses extrémités à la face arrière 103a du carter avant 103 par un premier point de liaison tribord 177a et par l'autre de ses extrémités à l'arche 152 par un deuxième point de liaison tribord (non visible sur la Fig. 2).

Les deux bielles tribord 157a convergent l'une vers l'autre dans une zone de convergence tribord qui est au niveau de l'arche 152, c'est-à-dire que les deux deuxièmes points de liaison tribord sont concentrés au même endroit. Comme précédemment, la zone de convergence tribord est préférentiellement un point d'intersection, mais elle peut être plus étendue.

En d'autres termes, selon l'invention, les deux bielles tribord 157a convergent l'une vers l'autre dans la zone de convergence tribord qui est au niveau de l'arche 152 lorsque, parallèlement à l'axe longitudinal X, la zone de convergence tribord se situe à une distance maximale égale à trois fois l'épaisseur de l'arche 152 soit en avant du plan d'intégration P', soit en arrière du plan d'intégration P'.

Le système de propulsion 100 comprend également une bielle centrale 156 qui est inscrite dans le plan médian vertical P et qui est fixée par l'une de ses extrémités à la face arrière 103a du carter avant 103 par un premier point de liaison centrale 156a et par l'autre de ses extrémités à l'arche 152 par un deuxième point de liaison centrale 156b où les deux points de liaison centrale 156a-b sont ainsi dans le plan médian vertical P.

Un tel système de propulsion 100 permet ainsi d'avoir une liaison isostatique entre la turbomachine et le mât d'accrochage par l'intermédiaire des différents éléments de fixation. On appelle zone de convergence 161, la zone au niveau de laquelle les axes des bielles 155a-b, 157a se croisent.

Dans le mode de réalisation de l'invention représenté à la Fig. 2, la ferrure arrière 108 et l'arche 152 sont inscrites dans le même plan d'intégration P' moyen qui est perpendiculaire à l'axe longitudinal X.

La zone de convergence bâbord 161 et la zone de convergence tribord sont alignées sur une droite de convergence D qui est perpendiculaire au plan médian vertical P, en d'autres termes, les zones de convergence 161 sont symétriques par rapport au plan médian vertical P. Du fait de la potentielle étendue spatiale des zones de convergence, la droite de convergence D est une droite moyenne reliant par exemple les barycentres des deux zones de convergence.

Les zones de convergence 161 sont proches de l'arche 152, ce qui limite la transmission des efforts hors plans et des couples non désirés au niveau de l'arche 152.

En outre, la bielle centrale 156 converge vers la droite de convergence D, c'est-à-dire que l'axe de la bielle centrale 156 et la droite de convergence D se coupent.

Selon un mode de réalisation général, en vue de derrière, la zone de convergence bâbord 161 est entre 10 heures et 11 heures et la zone de convergence tribord est entre 1 heure et 2 heures. D'une manière générale et en vue de derrière, pour chaque groupe de deux bielles 155a-b, 157a, il y a une bielle inférieure 155b dont le premier point de liaison 175b est entre 7 heures et 9 heures à bâbord, et entre 3 heures et 5 heures à tribord. En outre, pour chaque groupe de deux bielles 155a-b, 157a, il y une bielle supérieure 155b dont le premier point de liaison 175b est entre 10 heures et 11 heures à bâbord, et entre 1 heure et 2 heures à tribord. Préférentiellement, pour limiter les rotations autour d'un axe perpendiculaire à l'axe longitudinal X et en particulier autour de la droite de convergence D, le deuxième point de liaison 185a d'au moins une bielle 155a de chaque groupe de deux bielles 155a-b, 157a prend la forme d'une liaison encastrement avec l'arche 152. Ici, c'est la bielle supérieure 155a, 157a qui est reliée de manière encastrée à l'arche 152. Il y a ici un seul point de liaison encastré, mais il est possible d'en avoir plus. En outre ici, le premier point de liaison bâbord 175a et le premier point de liaison tribord 177a correspondants aux deux bielles supérieures 155a, 157a encastrées au niveau de l'arche 152, sont également encastrées au niveau de la face arrière 103a du carter avant 103.

Chacun des autres points de liaison au niveau de l'arche 152 et du carter avant 103 prend la forme d'une liaison rotule pour limiter les moments de flexion, mais il peut prendre également la forme d'une liaison par encastrement.

Chaque point de liaison 175b, 156a-b, 185a qui n'est pas encastré prend ici la forme d'une liaison par chape. Chaque liaison encastrement est réalisée par exemple par soudage, emmanchement en force, serrage par système vis-écrou, ...

Pour rigidifier latéralement le système de propulsion 100, les deux bielles 155a et 157a dont les deuxièmes points de liaison 185a sont encastrés, c'est-à-dire ici les deux bielles supérieures 155a, 157a, sont fixées rigidement l'une avec l'autre. La rigidification peut être réalisée par exemple par la mise en place d'une plaque de renfort 180 fixée, par exemple par soudage, entre les deux bielles 155a et 157a. Les deux bielles 155a et 157a sont ainsi fixées l'une à l'autre à travers l'arche 152 et également à travers une autre liaison rigide hors de l'arche 152.

La Fig. 4 montre plus clairement un exemple de la fixation entre la base 152a de l'arche 152 et la ferrure arrière 108. Cette fixation est assurée par deux bielles arrière 170a-b et par un troisième point de liaison 171c qui est un point de liaison en attente, c'est-à-dire qu'il ne devient actif que dans le cas d'une défaillance d'une des bielles arrière 170a-b.

Les deux bielles arrière 170a-b sont disposées symétriquement de part et d'autre du plan médian vertical P et chaque bielle arrière 170a-b est fixée de manière articulée par un premier point de liaison 17 la à la ferrure arrière 108 et par un deuxième point de liaison 171b à la base 152a. Chaque point de liaison 171a-b lié aux bielles arrière 170a-b prend au moins la forme d'une liaison pivot, mais préférentiellement il prend la forme d'une liaison rotule pour limiter les moments de flexion et chacun présente ici un axe de rotation principal qui est parallèle à l'axe longitudinal X.

Le troisième point de liaison 171c assure une liaison entre la base 152a et la ferrure arrière 108 et il est disposé au niveau du plan médian vertical P. Ce troisième point de liaison 171c prend au moins la forme d'une liaison pivot, mais préférentiellement il prend la forme d'une liaison rotule pour limiter les moments de flexion et il présente ici un axe de rotation principal qui est parallèle à l'axe longitudinal X.

Dans le mode de réalisation de l'invention représenté ici, les bielles arrière 170a-b sont inscrites dans le plan d'intégration P'.

Chaque point de liaison 171a-c prend ici la forme d'une liaison par chape.

Dans le cas du troisième point de liaison 171c, l'arbre de la liaison par chape est de diamètre légèrement inférieur au diamètre des alésages dans lesquels il est emmanché de manière à venir en contact avec lesdits alésages uniquement en cas de besoin.

La Fig. 4 montre également un mode de réalisation particulier de la fixation entre la deuxième extrémité de chaque bras 152b-c et le carter arrière 105. Cette fixation est assurée par deux paires de biellettes 158a-b, où les paires sont disposées symétriquement de part et d'autre du plan médian vertical P, et où chaque biellette 158a-b est inscrite dans un plan perpendiculaire à l'axe longitudinal X qui est également le plan dans lequel est inscrite l'arche 152.

Chaque biellette 158a-b est fixée de manière articulée et démontable à la deuxième extrémité du bras 152a-b qui est du même côté par un premier point de liaison 159a et au carter arrière 105 par un deuxième point de liaison 159b.

Ici, pour chaque paire de biellettes 158a-b, les deux biellettes 158a-b sont disposées symétriquement de part et d'autre d'un plan horizontal passant par l'axe longitudinal X, c'est-à-dire le plan XY. La mise en place symétrique permet d'assurer le positionnement du carter arrière 105 par rapport à l'arche 152.

Chaque point de liaison 159a-b lié aux biellettes 158a-b prend au moins la forme d'une liaison pivot, mais préférentiellement il prend la forme d'une liaison rotule pour limiter les moments de flexion et chacun de ces points de liaison 159a-b présente ici un axe de rotation principal qui est perpendiculaire à l'axe de la biellette 158a-b considérée et inscrite dans un plan perpendiculaire à l'axe longitudinal X et qui est également le plan dans lequel est inscrite l'arche 152.

Chaque point de liaison 159a-b prend ici la forme d'une liaison par chape.

Dans le mode de réalisation de l'invention représenté ici, les biellettes 158a-b sont inscrites dans le plan d'intégration P'.

La Fig. 3 montre plus clairement un exemple d'attache moteur avant 150 mis en œuvre dans l'invention, mais l'attache moteur 150 peut avoir une architecture différente.

L'attache moteur avant 150 comporte une ferrure avant 160 qui est fixée à la partie frontale 106a et deux bielles avant 162a-b disposées symétriquement de part et d'autre du plan vertical médian vertical P. Chaque bielle avant 162a-b est fixée de manière articulée par un premier point de liaison 164a à la ferrure avant 160 et par un deuxième point de liaison 164b au carter avant 103. Chaque point de liaison 164a-b lié aux bielles avant 162a-b prend au moins la forme d'une liaison pivot, mais préférentiellement il prend la forme d'une liaison rotule pour limiter les moments de flexion et chacun présente ici un axe de rotation principal qui est parallèle à l'axe longitudinal X. Chaque point de liaison 164a-b prend ici la forme d'une liaison par chape.

L'attache moteur avant 150 comporte également une liaison de type « spigot » avec un pion 166 qui s'étend verticalement, c'est-à-dire parallèlement à l'axe vertical Z et il est inscrit dans le plan médian vertical P.

Le pion 166 est solidaire de la ferrure avant 160 ou du carter avant 103 et il est logé selon le cas dans un alésage 168 du carter avant 103 ou de la ferrure avant 160.

L'ajustement entre l'alésage 168 et le pion 166 est tel qu'il n'y a pas de déplacement selon l'axe longitudinal X ou selon l'axe transversal Y et uniquement des déplacements selon l'axe vertical Z.

## Revendications

1. Système de propulsion (100) pour un aéronef (50), ledit système de propulsion (100) comportant :
- une turbomachine (102) s'étendant autour d'un axe longitudinal (X) et présentant un plan médian vertical (P) contenant l'axe longitudinal (X) et comportant un carter avant (103) avec une face arrière (103a) perpendiculaire à l'axe longitudinal (X) et un carter arrière (105),
- un mât d'accrochage (104) présentant une structure rigide (106) avec une partie frontale (106a) et un longeron inférieur (106b) auquel est fixée une ferrure arrière (108),
- une attache moteur avant (150) qui est fixée entre une partie supérieure du carter avant (103) et la partie frontale (106a) de la structure rigide (106),
- une arche (152) avec une base (152a) fixée de manière articulée à la ferrure arrière (108) et deux bras (152b-c) disposés de part et d'autre du plan médian vertical (P), chaque bras (152b-c) présentant une première extrémité solidaire de la base (152a) et une deuxième extrémité fixée de manière articulée au carter arrière (105),
- d'un côté bâbord du plan médian vertical (P), deux bielles bâbord (155a-b), où chaque bielle bâbord (155a-b) est fixée à la face arrière (103a) du carter avant (103) par un premier point de liaison bâbord (175a-b) et à l'arche (152) par un deuxième point de liaison bâbord (185a-b), où les deux bielles bâbord (155a-b) convergent l'une vers l'autre dans une zone de convergence bâbord (161) au niveau de l'arche (152),
- d'un côté tribord du plan médian vertical (P), deux bielles tribord (157a), où chaque bielle tribord (157a) est fixée à la face arrière (103a) du carter avant (103) par un premier point de liaison tribord (177a) et à l'arche (152) par un deuxième point de liaison tribord, où les deux bielles tribord (157a) convergent l'une vers l'autre dans une zone de convergence tribord au niveau de l'arche (152), et
- une bielle centrale (156) qui est inscrite dans le plan médian vertical (P) et qui est fixée à la face arrière (103a) du carter avant (103) par un premier point de liaison centrale (156a) et à l'arche (152) par un deuxième point de liaison centrale (156b).

2. Système de propulsion (100) selon la revendication 1, **caractérisé en ce que** la ferrure arrière (108) et l'arche (152) sont inscrites dans un même plan d'intégration (P') perpendiculaire à l'axe longitudinal (X).

3. Système de propulsion (100) selon la revendication 2, **caractérisé en ce que** chaque zone de convergence (161) se situe, parallèlement à l'axe longitudinal (X), à une distance maximale égale à trois fois l'épaisseur de l'arche (152) soit en avant du plan d'intégration (P'), soit en arrière du plan d'intégration (P').

4. Système de propulsion (100) selon l'une des revendications 1 à 3, **caractérisé en ce que** la zone de convergence bâbord (161) et la zone de convergence tribord sont symétriques par rapport au plan médian vertical (P) et **en ce que** la bielle centrale (156) converge vers une droite de convergence (D) moyenne reliant la zone de convergence bâbord (161) et la zone de convergence tribord.

5. Système de propulsion (100) selon l'une des revendications 1 à 4, **caractérisé en ce que** la zone de convergence bâbord (161) est entre 10 heures et 11 heures et **en ce que** la zone de convergence tribord est entre 1 heure et 2 heures.

6. Système de propulsion (100) selon l'une des revendications 1 à 5, **caractérisé en ce que** pour chaque groupe de deux bielles (155a-b, 157a), il y a une bielle inférieure (155b) dont le premier point de liaison (175b) est entre 7 heures et 9 heures, respectivement entre 3 heures et 5 heures, et **en ce que** pour chaque groupe de deux bielles (155a-b, 157a), il y a une bielle supérieure (155a, 157a) dont le premier point de liaison (175a, 177a) est entre 10 heures et 11 heures, respectivement entre 1 heure et 2 heures.

7. Système de propulsion (100) selon l'une des revendications 1 à 6, **caractérisé en ce que** le deuxième point de liaison (185a) d'au moins une bielle (155a) de chaque groupe de deux bielles (155a-b, 157a) prend la forme d'une liaison encastrement avec l'arche (152).

8. Système de propulsion (100) selon la revendication 7, **caractérisé en ce que** les deux bielles (155a, 157a) dont les deuxièmes points de liaison (185a) sont encastrés, sont en outre fixées rigidement l'une avec l'autre.

9. Système de propulsion (100) selon l'une des revendications 1 à 8, **caractérisé en ce que** la fixation entre la base (152a) et la ferrure arrière (108) est assurée, d'une part, par deux bielles arrière (170a-b) disposées symétriquement de part et d'autre du plan médian vertical (P), où chaque bielle arrière (170a-b) est fixée de manière articulée par un premier point de liaison (171a) à la ferrure arrière (108) et par un deuxième point de liaison (171b) à la base (152a), et, d'autre part, au niveau du plan médian vertical (P), par un troisième point de liaison (171c) entre la base (152a) et la ferrure arrière (108).

10. Système de propulsion (100) selon la revendication 9 lorsqu'elle dépend de la revendication 2, **caractérisé en ce que** les bielles arrière (170a-b) sont inscrites dans le plan d'intégration (P').

11. Système de propulsion (100) selon l'une des revendications 1 à 10, **caractérisé en ce que** la fixation entre la deuxième extrémité de chaque bras (152b-c) et le carter arrière (105) est assurée par deux paires de biellettes (158a-b) disposées symétriquement par paire, de part et d'autre du plan médian vertical (P), et où chaque biellette (158a-b) est inscrite dans un plan perpendiculaire à l'axe longitudinal (X), et où chaque biellette (158a-b) est fixée de manière articulée à la deuxième extrémité du bras (152a-b) qui est du même côté par un premier point de liaison (159a) et au carter arrière (105) par un deuxième point de liaison (159b).

12. Système de propulsion (100) selon la revendication 11 lorsqu'elle dépend de la revendication 2, **caractérisé en ce que** les biellettes (158a-b) sont inscrites dans le plan d'intégration (P').

13. Système de propulsion (100) selon l'une des revendications 11 ou 12, **caractérisé en ce que** pour chaque paire de biellettes (158a-b), les deux biellettes (158a-b) sont disposées symétriquement de part et d'autre d'un plan horizontal passant par l'axe longitudinal (X).

14. Système de propulsion (100) selon l'une des revendications 1 à 13, **caractérisé en ce que** l'attache moteur avant (150) comporte une ferrure avant (160) fixée à la partie frontale (106a), deux bielles avant (162a-b) disposées symétriquement de part et d'autre du plan médian vertical (P) et un pion (166) vertical solidaire de la ferrure avant (160) ou du carter avant (103) et logé dans un alésage (168) respectivement du carter avant (103) ou de la ferrure avant (160), où chaque bielle avant (162a-b) est fixée de manière articulée par un premier point de liaison (164a) à la ferrure avant (160) et par un deuxième point de liaison (164b) au carter avant (103).

15. Aéronef (50) comportant un système de propulsion (100) selon l'une des revendications précédentes.
